# EUROPÄISCHE PATENTANMELDUNG

(11) **EP 2 138 465 A2**
(43) Veröffentlichungstag der Anmeldung: **30.12.2009**
(21) Anmeldenummer: 09007294.3
(22) Anmeldetag: 02.06.2009
(51) Int. Cl.: C03B 3/02, F28D 9/00, F28D 21/00, F28F 9/26

(54) **Wärmetauscher und Verfahren zum Betrieb eines Wärmetauschers**

(30) Priorität: 27.06.2008 DE 102008030161
(71) Anmelder: ZIPPE Industrieanlagen GmbH, 97877 Wertheim (DE)
(72) Erfinder: Kloss, Wolfgang, 97892 Kreuzwertheim (DE)
(74) Vertreter: von den Steinen, Axel

(57) **Zusammenfassung**

Die Erfindung betrifft einen Wärmetauscher (01) zum indirekten Vorwärmen von Schmelzgut (02) aus Crlasscherben und/oder Glasgemenge unter Nutzung von Rauchgas (03), wobei der Wärmetauscher (01) primärseitig mehrere Schmelzgutkanäle (11) aufweist, in denen das Schmelzgut (02) zur Vorwärmung von einer Schmelzgutaufgabe (05) zu einer Schmelzgutausgabe (06) durch den Wärmetauscher (01) gefördert werden kann, und wobei der Wärmetauscher (01) sekundärseitig mehrere Rauchgaskanäle (12) aufweist, in denen das Rauchgas (03) von einem Rauchgaseintritt (07) zu einem Rauchgasaustritt (08) durch den Wärmetauscher (01) strömen kann, und wobei die im Rauchgas (03) enthaltene Wärme zur Vorwärmung des Schmelzgutes (02) durch die Trennwandungen (13) des Wärmetauschers (01), die die Rauchgaskanäle (12) von den Schmelzgutkanälen (11) trennen, indirekt und ohne direkten Kontakt zwischen Rauchgas (03) und Schmelzgut (02) übertragen werden kann, wobei die Trennwandungen (13) zwischen den Rauchgaskanälen (12) und den Schmelzgutkanälen (11) Absaugöffnungen (14) aufweisen, durch die Wasserdampf (15) aus den Schmelzgutkanälen (11) in die Rauchgaskanäle (12) abgesaugt werden kann.

## Beschreibung

Die Erfindung betrifft einen Wärmetauscher zum indirekten Vorwärmen von Schmelzgut aus Glasscherben und/oder Glasgemenge unter Nutzung von Rauchgas nach dem Oberbegriff des Anspruchs 1. Weiter betrifft die Erfindung ein Verfahren zum Betrieb eines solchen Wärmetauschers.

Es sind Wärmetauscher zum Vorwärmen von Schmelzgut aus Glasscherben und/oder Glasgemenge oder dergleichen Schüttgütern mittels Rauchgas bekannt. Bei diesen Wärmetauschern bewegt sich das Schmelzgut unter Schwerkrafteinfluss in einer Vielzahl von schmalen Säulen vertikal abwärts und wird dabei durch indirekten Wärmeübergang durch das ebenfalls durch den Wärmetauscher strömende Rauchgas erwärmt.

Die bekannten Wärmetauscher zur Erwärmung des Schmelzgutes funktionieren problemlos, solange das vorzuwärmende Schüttgut trocken ist. Denn das trockene Schüttgut fließt in den Kanälen des Wärmetauschers unter Einfluss der Schwerkraft gut nach unten ab, ohne dass es zu Verklebungen oder Anbackungen oder letztendlich zu blockierenden Brückenbildungen kommt. Dies gilt auch in gewissem Maße noch für Glasscherben im feuchten Zustand, denn zwischen den Glasscherbenteilen bilden sich genügend Hohlräume aus, durch welche der beim Vorwärmen entstehende Wasserdampf nach oben aus dem Plattenwärmetauscher entweichen kann. Wenn es sich jedoch bei dem vorzuwärmenden Schmelzgut um feuchte Glasscherben, insbesondere feuchtes Glasgemenge, handelt, was die Regel ist, versagen die bekannten Wärmetauscher und Vorwärmverfahren. In diesen Fällen kommt es in dem Wärmetauscher zu Verklebungen und Brückenbildungen, wodurch der Abwärtsfluss des vorzuwärmenden Schüttguts unterbrochen bzw. blockiert wird. Der Grund für diese Störung ist Wasserdampf, der aus dem Glasgemenge bei einer Vorwärmung über eine Temperatur von 100° C austritt. Insbesondere trägt das im Sodaanteil des Glasgemenges enthaltene Kristallwasser zur Wasserdampfbildung bei. Da der Verdampfungsvorgang beim Vorwärmen eines solchen Schüttguts erst in einer Tiefe zwischen circa 1 bis 2 Metern beginnt, kann bei einem Aufgabegut aus Glasscherben und Glasgemenge der Dampf nicht mehr nach oben aus dem Aufgabegut entweichen, da Letzteres wie eine Art Verschluss wirkt. Wie schon erwähnt, können aufgrund der Kondensation des Wasserdampfs in den Kanälen des Wärmetauschers Brückenbildungen mit der Folge von Durchflusssperren entstehen. Bekannte mechanische Lösungen für dieses Problem sind baulich aufwendig und in der Herstellung sehr teuer.

Die DE 42 13 481 C1 beschreibt einen Wärmetauscher mit einer direkt an die Schmelzgutaufgabe anschließenden Vorwärmstrecke, die mit heißem Rauchgas beheizt wird, um die im heißen Rauchgas enthaltene Wärme indirekt auf das Schmelzgut zu übertragen und eine so starke Vorwärmung zu erreichen, dass der Wasserdampf weitgehend aus dem Schmelzgut austritt. Am Ende der Vorwärmstrecke sind dann Hohlräume vorgesehen, durch welche der Wasserdampf nach außen entweichen kann, um auf diese Weise eine Kondensation und die gefürchtete Brückenbildung im nachfolgenden Wärmetauscher zu vermeiden. Der abgezogene Wasserdampf wird dann durch Abführleitungen nach außen geführt. Nachteilig an dieser Konstruktion ist es, dass in den Wärmetauscher zusätzliche Module zur Absaugung des Wasserdampfs eingebaut werden müssen, was relativ aufwendig ist. Außerdem sind diese Art von Wärmetauschern sehr wartungsintensiv, da insbesondere die Abführleitungen zur Versottung neigen und regelmäßig gereinigt werden müssen.

Ausgehend von diesem Stand der Technik ist es deshalb Aufgabe der vorliegenden Erfindung, einen neuen Wärmetauscher zur indirekten Vorwärmung von Schmelzgut aus Glasscherben und/oder Glasgemenge vorzuschlagen, der kostengünstig hergestellt werden kann und einen zuverlässigen Betrieb ermöglicht. Weiter ist es Aufgabe der vorliegenden Erfindung, ein Verfahren zum Betrieb eines solchen Wärmetauschers vorzuschlagen.

Diese Aufgaben werden durch einen Wärmetauscher bzw. ein Verfahren nach der Lehre der beiden unabhängigen Hauptansprüche gelöst. Vorteilhafte Ausführungsformen der Erfindung sind Gegenstand der Unteransprüche.

Die erfindungsgemäße indirekte Vorwärmung des Schmelzgutes unter Vermeidung der nachteiligen Auswirkungen einer Wasserdampfbildung beruht auf dem Grundgedanken, dass die Trennwandungen zwischen den Rauchgaskanälen und den Schmelzgutkanälen, die das Rauchgas von dem Schmelzgut trennen, geeignete Absaugöffnungen aufweisen, durch die der in den Schmelzgutkanälen entstehende Wasserdampf aus den Schmelzgutkanälen in die Rauchgaskanäle abgesaugt werden kann. Dabei ist für ein ausreichendes Gasdruckgefälle zwischen dem Wasserdampf in den Schmelzgutkanälen und dem Rauchgas in den Rauchgaskanälen zu sorgen, damit die Gasströmung jeweils aus den Schmelzgutkanälen in die Rauchgaskanäle gerichtet ist und das unerwünschte Eindringen von Rauchgas in die Schmelzgutkanäle verhindert wird.

Um das erforderliche Gasdruckgefälle zwischen den Schmelzgutkanälen und den Rauchgaskanälen aufzubauen, ist es besonders vorteilhaft, wenn die Schmelzgutkanäle unter Atmosphärendruck stehen und in den Rauchgaskanälen ein Unterdruck aufgebaut wird, der das Rauchgas durch die Rauchgaskanäle fördert. Zur Schaffung des Unterdrucks in den Rauchgaskanälen kann im Rauchgasabzug eine Gasfördereinrichtung, insbesondere ein Ventilator, installiert sein.

Welche Gestalt die Absaugöffnungen in den Trennwandungen aufweisen, ist grundsätzlich beliebig. Besonders wirkungsvoll sind Schlitzöffnungen, da diese Schlitzöffnungen zum einen sehr preisgünstig hergestellt werden können und zum anderen eine effektive Absaugung des Wasserdampfs aus den Schmelzgutkanälen in die Rauchgaskanäle ermöglichen. Außerdem wird durch die schlitzartigen Absaugöffnungen das unerwünschte Eindringen von Rauchgas in die Schmelzgutkanäle weitgehend verhindert.

Zur Anordnung der Schlitzöffnungen in den Trennwandungen ist es besonders vorteilhaft, wenn die Längsachse der Schlitzöffnungen quer zur Förderrichtung des Schmelzgutes verläuft. Auch durch diese Maßnahme kann wiederum das unerwünschte Eindringen von Rauchgas in die Schmelzgutkanäle verhindert werden.

Zur weiteren Verbesserung der Strömungseigenschaften im Bereich der Absaugöffnungen, insbesondere um das unerwünschte Eindringen von Rauchgasen in die Schmelzgutkanäle zu verhindern, können Strömungsleitelemente im Bereich der Absaugöffnungen angebracht werden. Durch die Strömungsleitelemente kann entweder die Strömung des abgesaugten Wasserdampfs und/oder die Strömung des in den Rauchgaskanälen strömenden Rauchgases im Bereich der Absaugöffnungen umgelenkt werden.

Außerdem können auch in den Rauchgaskanälen Strömungsleitelemente vorgesehen sein, mit denen die Strömung des in den Rauchgaskanälen strömenden Rauchgases gelenkt wird. Insbesondere kann mit Hilfe solcher Strömungsleitelemente gewährleistet werden, dass eine von Unten nach Oben führende mäanderförmige Durchströmung der Rauchgase durch den Wärmetauscher erreicht wird.

Die Schmelzgutkanäle zur Durchförderung des Schmelzgutes, die sich zwischen Schmelzgutaufgabe und Schmelzgutausgabe durchgehend erstrecken, sollten bevorzugt vertikal nach unten ausgerichtet sein, um eine Förderung des Schmelzgutes ausschließlich unter Schwerkrafteinfluss durch die Schmelzgutkanäle zu ermöglichen.

Eine Ausführungsform der Erfindung ist in den Zeichnungen schematisch dargestellt und wird nachfolgend beispielhaft erläutert.

Es zeigen:
- Fig. 1: eine schematische Seitenansicht eines Wärmetauschers zur Vorwärmung eines Schmelzgutes aus Glasscherben und Glasgemenge in perspektivischer Ansicht;
- Fig. 2: zwei Wärmetauschermodule und ein Rauchgasumlenkblech zur Herstellung des Wärmetauschers gemäß Fig. 1 in perspektivischer Ansicht;
- Fig. 3: das Wärmetauschermodul gemäß Fig. 2 in einer aufgebrochenen Darstellung;
- Fig. 4: das Wärmetauschermodul gemäß Fig. 3 in einem schematisierten Querschnitt entlang der Schnittlinie I-I.

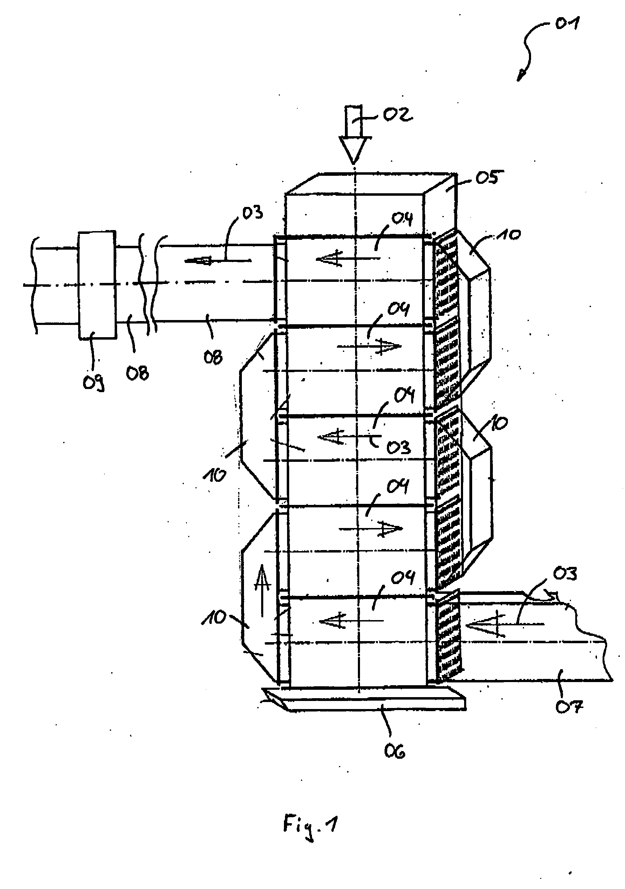

Der in Fig. 1 dargestellte Wärmetauscher 01, der in der Bauart eines Plattenwärmetauschers ausgebildet ist, dient zur Vorwärmung von Schmelzgut 02 unter Verwendung von Rauchgas 03. Das Schmelzgut besteht dabei aus einer Mischung aus Glasscherben und Glasgemenge, bevor es in eine Schmelzwanne zur Herstellung von Glas eingebracht wird. Das Schmelzgut wird in dem Wärmetauscher 01 auf mehrere 100° C vorgewärmt und als Heizgas wird vorzugsweise das in der Glasschmelzanlage anfallende Rauchgas benutzt, um eine entsprechende Energieeinsparung erzielen zu können.

Der Wärmetauscher 01 ist in Modulweise aus einzelnen Wärmetauschermodulen 04 zusammengesetzt. Der in Fig. 1 dargestellte Wärmetauscher 01 wird beispielsweise von fünf in einer vertikalen Reihe übereinander angeordneten Wärmetauschermodulen 04 gebildet. Auf dem obersten Wärmetauschermodul 04 ist eine Schmelzgutaufgabe 05 angeordnet, durch die das Schmelzgut von oben in den Wärmetauscher 01 eingefördert wird. Unter dem untersten Wärmetauschermodul 04 des Wärmetauschers 01 ist eine Schmelzgutausgabe 06 angeordnet, wo das vorgewärmte Schmelzgut abgenommen und anschließend zu einer nicht gezeigten Schmelzwanne der Glasschmelzanlage zugefördert wird.

Das zur Vorwärmung des Schmelzgutes 02 verwendete Rauchgas 03 wird über einen Rauchgaseintritt 07 in das unterste Wärmetauschermodul 04 eingefördert und tritt am obersten Wärmetauschermodul 04 durch einen Rauchgasaustritt 08 wieder aus dem Wärmetauscher 01 aus. Zur Förderung des Rauchgases 03 ist dabei im Rauchgasaustritt 08 ein Ventilator 09 vorgesehen, der einen Unterdruck aufbaut und das Rauchgas 03 durch den Wärmetauscher 01 saugt. Zwischen den verschiedenen Wärmetauschermodulen 04 sind Umlenkbleche 10 befestigt, so dass das Rauchgas 03 mäanderförmig nach oben strömt und seine Wärme ohne direkten Kontakt mit dem Schmelzgut 02 durch die Trennwandungen der Wärmetauschermodule 04 hindurch auf das Schmelzgut 02 überträgt.

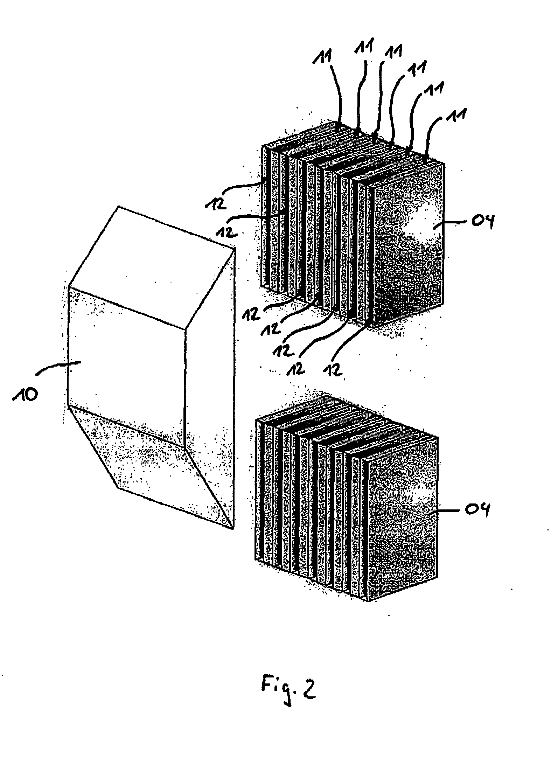

In Fig. 2 sind zwei Wärmetauschermodule 04 und ein zugeordnetes Umlenkblech 10 in perspektivischer Ansicht dargestellt. Die Wärmetauschermodule 04 werden dabei miteinander fluchtend vertikal übereinander angeordnet, so dass sich mehrere sich vertikal nach oben erstreckende Schmelzgutkanäle 11 bilden, durch die das Schmelzgut 02 unter Schwerkrafteinfluss und ohne weitere mechanische Fördereinrichtungen nach unten durchrutscht.

Zwischen den Schmelzgutkanälen 11 sind jeweils Rauchgaskanäle 12 gebildet, die quer zur Förderrichtung des Schmelzgutes 02 vom Rauchgas 03 durchströmt werden. Zwischen den Schmelzgutkanälen 11 und den Rauchgaskanälen 12 sind Trennwandungen 13 vorhanden, die die Schmelzgutkanäle 11 von den Rauchgaskanälen 12 trennen, so dass die Vorwärmung des Schmelzgutes durch das Rauchgas indirekt und ohne direkten Kontakt zwischen Rauchgas und Schmelzgut erfolgt.

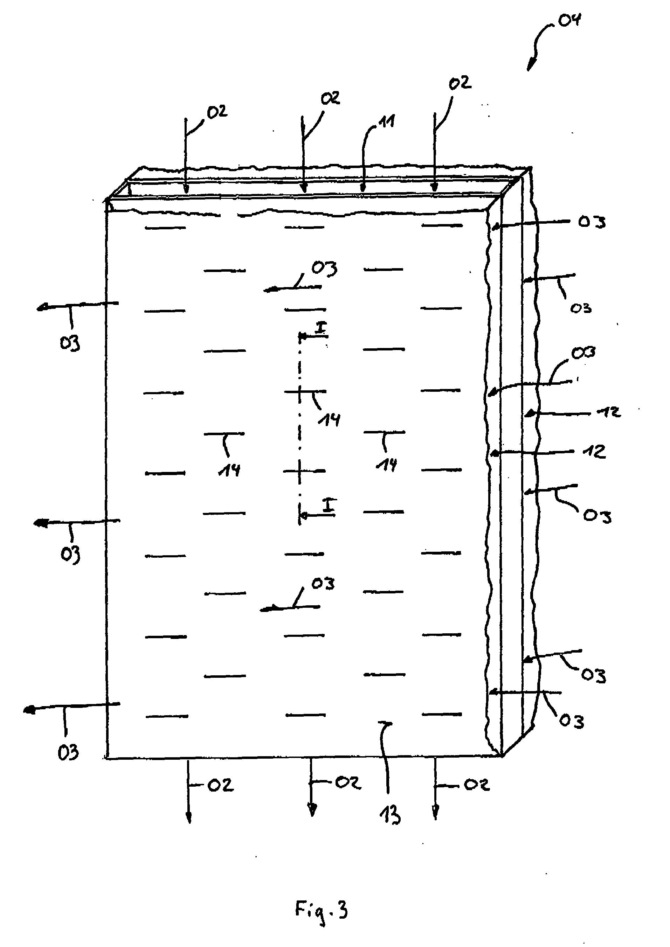

Fig. 3 zeigt ein Wärmetauschermodul 04 mit einem Schtnelzgutkanal 11 und zwei gebrochen dargestellten Rauchgaskanälen 12 in perspektivischer Ansicht. In den Trennwandungen 13 zwischen den Rauchgaskanälen 12 und den Schmelzgutkanälen 11 ist jeweils eine Vielzahl von Schlitzöffnungen 14 vorgesehen, die sich mit ihrer Längsachse quer zur Förderrichtung des Schmelzgutes 02 erstrecken. Durch die Schlitzöffnungen 14 hindurch kann der bei der Vorwärmung des Schmelzgutes 02 in den Schmelzgutkanälen 11 entstehende Wasserdampf abgesaugt und über die Rauchgaskanäle 12 abgeführt werden.

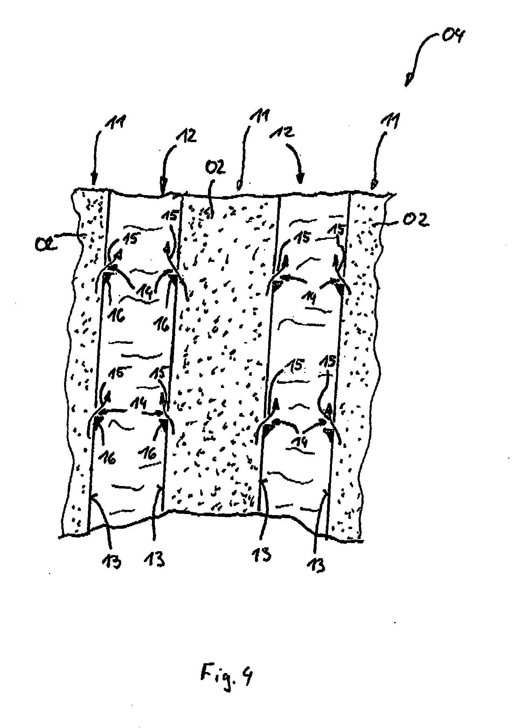

Fig. 4 zeigt das Wärmetauschermodul 04 im schematisierten Querschnitt entlang der Schnittlinie I-I. Der in den Schmelzgutkanälen 11 im Schmelzgut 02 durch die Vorwärmung entstehende Wasserdampf 15 wird durch die Schlitzöffnungen 14 hindurch in die Rauchgaskanäle 12 abgesaugt und zusammen mit dem Rauchgas 03 abgeführt. Durch Strömungsleitelemente 16, nämlich keilförmige Leisten an der Unterseite der Schlitzöffnungen 14, wird eine Umlenkung der Rauchgasströmung und der Wasserdampfströmung bewirkt, so dass aufgrund des Druckgefälles zwischen den Rauchgaskanälen 12 und den Schmelzgutkanälen 11 kein Rauchgas 03 durch die Schlitzöffnungen 14 in die Schmelzgutkanäle 11 eindringen kann.

### Bezugszeichenliste

- 01: Wärmetauscher
- 02: Schmelzgut
- 03: Rauchgas
- 04: Wärmetauschermodul
- 05: Schmelzgutaufgabe
- 06: Schmelzgutausgabe
- 07: Rauchgaseintritt
- 08: Rauchgasaustritt
- 09: Ventilator
- 10: Umlenkblech
- 11: Schmelzgutkanal
- 12: Rauchgaskanal
- 13: Trennwandung
- 14: Schlitzöffnung
- 15: Wasserdampf
- 16: Strömungsleitelement

## Patentansprüche

1. Wärmetauscher (01) zum indirekten Vorwärmen von Schmelzgut (02) aus Glasscherben und/oder Glasgemenge unter Nutzung von Rauchgas (03), wobei der Wärmetauscher (01) primärseitig mehrere Schmelzgutkanäle (11) aufweist, in denen das Schmelzgut (02) zur Vorwärmung von einer Schmelzgutaufgabe (05) zu einer Schmelzgutausgabe (06) durch den Wärmetauscher (01) gefördert werden kann, und wobei der Wärmetauscher (01) sekundärseitig mehrere Rauchgaskanäle (12) aufweist, in denen das Rauchgas (03) von einem Rauchgaseintritt (07) zu einem Rauchgasaustritt (08) durch den Wärmetauscher (01) strömen kann, und wobei die im Rauchgas (03) enthaltene Wärme zur Vorwärmung des Schmelzgutes (02) durch die Trennwandungen (13) des Wärmetauschers (01), die die Rauchgaskanäle (12) von den Schmelzgutkanälen (11) trennen, indirekt und ohne direkten Kontakt zwischen Rauchgas (03) und Schmelzgut (02) übertragen werden kann,
**dadurch gekennzeichnet,**
**dass** die Trennwandungen (13) zwischen den Rauchgaskanälen (12) und den Schmelzgutkanälen (11) Absaugöffnungen (14) aufweisen, durch die Wasserdampf (15) aus den Schmelzgutkanälen (11) in die Rauchgaskanäle (12) abgesaugt werden kann.

2. Wärmetauscher nach Anspruch 1,
**dadurch gekennzeichnet,**
**dass** das Rauchgas (03) unter Nutzung eines Unterdrucks durch die Rauchgaskanäle (12) gefördert werden kann, wobei zur Schaffung des Unterdrucks in den Rauchgaskanälen (12) eine Grasfördereinrichtung, insbesondere ein Ventilator (09), vorgesehen ist.

3. Wärmetauscher nach Anspruch 1 oder 2,
**dadurch gekennzeichnet,**
**dass** die Absaugöffnungen in der Art von Schlitzöffnungen (14) ausgebildet sind.

4. Wärmetauscher nach Anspruch 3,
**dadurch gekennzeichnet,**
**dass** die Schlitzöffnungen (14) jeweils mit ihrer Längsachse quer zur Förderrichtung des Schmelzgutes (02) verlaufend in den Trennwandungen (13) angebracht sind.

5. Wärmetauscher nach einem der Ansprüche 1 bis 4,
**dadurch gekennzeichnet,**
**dass** an den Absaugöffnungen (14) Strömungsleitelemente (16), insbesondere Strömungsumlenkleisten, vorgesehen sind, mit denen die Strömung des abgesaugten Wasserdampfs (15) und/oder die Strömung des in den Rauchgaskanälen (12) strömenden Rauchgases (03) im Bereich der Absaugöffnungen (14) umgelenkt werden kann.

6. Wärmetauscher nach einem der Ansprüche 1 bis 5,
**dadurch gekennzeichnet,**
**dass** in den Rauchgaskanälen Strömungsleitelemente vorgesehen sind, mit denen die Strömung des in den Rauchgaskanälen strömenden Rauchgases gelenkt werden kann.

7. Wärmetauscher nach einem der Ansprüche 1 bis 6,
**dadurch gekennzeichnet,**
**dass** die Schmelzgutkanäle (11) sich zwischen Schmelzgutaufgabe (05) und Schmelzgutausgabe (06) durchgehend vertikal nach unten erstrecken.

8. Wärmetauscher nach einem der Ansprüche 1 bis 7,
**dadurch gekennzeichnet,**
**dass** der Wärmetauscher aus mehreren, insbesondere übereinander angeordneten, Wärmetauschermodulen (04) zusammengesetzt ist.

9. Verfahren zum Betrieb eines Wärmetauschers (01) zum indirekten Vorwärmen von Schmelzgut (02) aus Glasscherben und/oder Glasgemenge unter Nutzung von Rauchgas (03), wobei der Wärmetauscher (01) primärseitig mehrere Schmelzgutkanäle (11) aufweist, in denen das Schmelzgut (02) zur Vorwärmung von einer Schmelzgutaufgabe (05) zu einer Schmelzgutausgabe (06) durch den Wärmetauscher (01) gefördert werden kann, und wobei der Wärmetauscher (01) sekundärseitig mehrere Rauchgaskanäle (12) aufweist, in denen das Rauchgas (03) von einem Rauchgaseintritt (07) zu einem Rauchgasaustritt (08) durch den Wärmetauscher (01) strömen kann, und wobei die im Rauchgas (03) enthaltene Wärme zur Vorwärmung des Schmelzgutes (02) durch die Trennwandungen (13) des Wärmetauschers (01), die die Rauchgaskanäle (12) von den Schmelzgutkanälen (11) trennen, indirekt und ohne direkten Kontakt zwischen Rauchgas (03) und Schmelzgut (02) übertragen wird,
**dadurch gekennzeichnet,**
**dass** zwischen den Rauchgaskanälen (12) und den Schmelzgutkanälen (11) eine Druckdifferenz aufgebaut wird, wobei Wasserdampf aufgrund der Druckdifferenz durch Absaugöffnungen (14) in den Trennwandungen (13) aus den Schmelzgutkanälen (11) in die Rauchgaskanäle (12) abgesaugt wird.

10. Verfahren nach Anspruch 9,
**dadurch gekennzeichnet,**
**dass** das Schmelzgut (02) ausschließlich unter Schwerkrafteinfluss durch die Schmelzgutkanäle gefördert wird.
